(19) Europäisches Patentamt / European Patent Office / Office européen des brevets

(11) **EP 4 147 339 B1**

(12) **EUROPEAN PATENT SPECIFICATION**

(45) Date of publication and mention of the grant of the patent:
**06.03.2024 Bulletin 2024/10**

(21) Application number: **21722245.4**

(22) Date of filing: **03.05.2021**

(51) International Patent Classification (IPC):
*H02M 1/42* (2007.01)    *H02M 3/335* (2006.01)
*H02M 1/12* (2006.01)    *H02M 3/158* (2006.01)
*H02M 7/487* (2007.01)

(52) Cooperative Patent Classification (CPC):
**H02M 1/4216; H02M 1/0095; H02M 1/4225;
H02M 1/4233; H02M 3/33569; H02M 3/33573;
H02M 3/33584; H02M 7/487;** H02M 1/007;
H02M 1/0074; H02M 1/12; H02M 3/158;
H02M 3/1582; H02M 7/4833; Y02B 70/10;    (Cont.)

(86) International application number:
**PCT/EP2021/061592**

(87) International publication number:
**WO 2021/224192 (11.11.2021 Gazette 2021/45)**

(54) **ELECTRICAL POWER CONVERTER**

ELEKTRISCHER LEISTUNGSWANDLER

CONVERTISSEUR D'ALIMENTATION ÉLECTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.05.2020 NL 2025504**

(43) Date of publication of application:
**15.03.2023 Bulletin 2023/11**

(73) Proprietor: **Prodrive Technologies Innovation
Services B.V.
5692 EM Son en Breugel (NL)**

(72) Inventor: **EVERTS, Jordi
5692 EM Son en Breugel (NL)**

(74) Representative: **AWA Benelux
AWA Benelux SA
Tour & Taxis - Royal Depot box:216
Havenlaan 86c Avenue du Port
1000 Bruxelles (BE)**

(56) References cited:
FR-A1- 3 064 848        US-A1- 2013 003 431
US-A1- 2014 021 180

• **BARBOSA P ET AL: "Analysis and evaluation of
the two-switch three-level boost rectifier",
32ND.ANNUAL IEEE POWER ELECTRONICS
SPECIALISTS CONFERENCE. PESC 2001.
CONFERENCE PROCEEDINGS. VANCOUVER,
CANADA, JUNE 17 - 21, 2001; [ANNUAL POWER
ELECTRONICS SPECIALISTS CONFERENCE],
NEW YORK, NY : IEEE, US, vol. 3, 17 June 2001
(2001-06-17), pages 1659-1664, XP010559466,
DOI: 10.1109/PESC.2001.954357 ISBN:
978-0-7803-7067-8 cited in the application**

(52) Cooperative Patent Classification (CPC): (Cont.)
Y02T 10/70; Y02T 10/7072

## Description

## Technical field

The invention relates to the field of electrical power conversion. In particular, the invention relates to an electrical converter for converting between three phase AC and DC with galvanic isolation.

## Background art

A typical three-phase galvanically isolated power supply, such as those used for charging battery driven electrical vehicles, comprises a three-phase rectifier with power factor correction (PFC) unit coupled to an isolated DC/DC converter unit. The isolated DC/DC converter unit converts power between the DC output of the three-phase rectifier unit, having typical voltage levels in the range of 700-800V, and the battery of the vehicle, having typical voltage levels in the range of 250-450V. In such cases where the input voltage (e.g. 700-800V) of the DC/DC converter unit is significantly higher than the output voltage (e.g. 250-450V) of the DC/DC converter unit, the isolated DC/DC converter unit often comprises two series-in, parallel-out coupled isolated DC/DC converters.

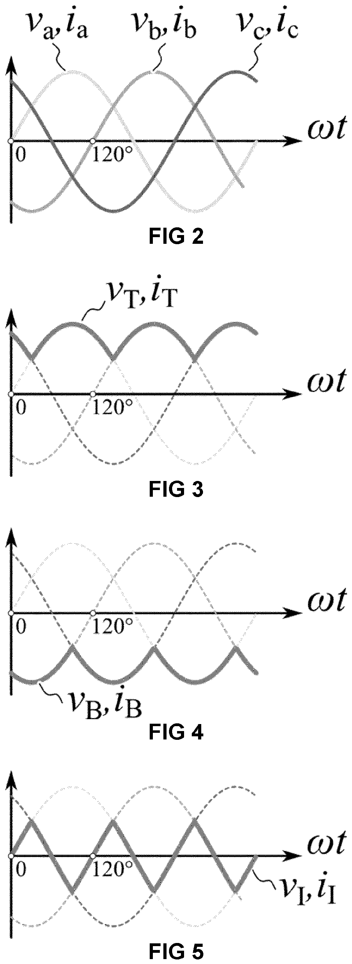

Barbosa P. et al., "Analysis and evaluation of the two-switch three-level boost rectifier", 32nd annual IEEE Power Electronics Specialists Conference 2001 Conference proceedings, vol. 3, 17 June 2001, pp. 1659-1664, describes in relation to Fig. 3(a) a three-phase power supply comprising a boost type rectifier unit and two isolated DC/DC converters connected across the output capacitors of the boost rectifier. The rectifier unit comprises an input filter with inductors coupled to each of the phase inputs, a passive three-phase bridge rectifier, a boost circuit and two output capacitors sharing the DC bus voltage.

One drawback associated with the above power supplies is that they tend to become bulky and expensive.

Silva M. et al., "Isolated Swiss-Forward Three-Phase Rectifier with Resonant Reset", IEEE Transactions on Power Electronics, Vol. 31, No. 7, 2016, pp. 4795-4808 describe a modified Swiss-type rectifier. PFC operation of the Swiss Rectifier is basically achieved by a combination of two stacked DC/DC buck converters and an active selector circuit comprising three bidirectional switches connected to the common node of the DC/DC buck converters in order to allow for active third-harmonic current injection. In their modified rectifier, the two DC/DC buck converters are replaced by two isolated DC/DC converters. This obviates the need of providing a secondary isolated stage. One drawback of the above converter is that the input voltage applied to the isolated DC/DC converters goes to zero at the crossings of the AC input phase voltages, resulting in poor controllability of the isolated DC/DC converters at these crossings leading to higher total harmonic distortion of the AC input currents. Also the isolated DC/DC converters experience a wide input voltage range resulting in an inefficient operation of the isolated DC/DC converters, requiring over dimensioning the isolated DC/DC converters.

FR 3064848 discloses a battery charging device comprising a three-phase rectifier stage with two DC busses at the output. A capacitor is connected across each DC bus and each capacitor is further coupled to a resonant LLC DC/DC converter circuit including galvanic isolation.

US 2013/003431 discloses a power converter comprising a three-phase rectifier stage configured to provide multiple DC voltage levels. The power converter further comprises an output stage of a plurality of interleaved LLC converters.

US 2014/021180 discloses a power supply comprising a three-phase rectifier stage, a pre-regulator circuit providing a regulated bus voltage, which is shared by two series-connected capacitors. The pre-regulator circuit comprises a stacked boost circuit to regulate the DC bus voltage.

## Summary of the invention

There is a need in the art to provide an improved galvanically isolated three-phase AC / DC power supply. In particular, it is an object of the invention to provide such power supplies which are more compact and more economical. It is an object to provide such power supplies which have similar or even improved performance characteristics over prior art power supplies of the above kind.

According to the invention, there is therefore provided an electrical converter for converting an AC signal having at least three phases into a galvanically isolated DC signal or vice versa, as set out in the appended claims.

An electrical converter according to the invention comprises (at least) three phase terminals, and two DC terminals, a first converter stage, a second converter stage and a third converter stage. The first converter stage comprises conversion circuitry configured for converting between the three phase voltages provided at the three phase terminals and a first signal provided at a first intermediate node and a second intermediate node. The conversion circuitry can be a bridge converter, in particular comprising a bridge leg for each of the at least three phase terminals. The first converter stage further comprises a phase selector comprising first active switches configured to selectively connect the three phase terminals to a third intermediate node.

The second converter stage is configured for converting between a second signal at a fourth intermediate node and a fifth intermediate node and a third signal at a sixth intermediate node and a seventh intermediate node. The second converter stage comprises or consists of a boost circuit, comprised of a first boost circuit and a second boost circuit series stacked between the sixth and seventh intermediate node.

A link, in particular a DC-link, connects the first intermediate node to the fourth intermediate node, and the second intermediate node to the fifth intermediate node. The link can comprise a differential mode filter, particularly operably coupled to the second converter stage.

The third converter stage comprises or consists of a galvanically isolated DC/DC converter stage comprising a first side and a second side galvanically isolated from each other. The first side is connected to the sixth intermediate node, a first common node and the seventh intermediate node. The DC terminals are connected to the second side of the DC/DC converter stage. The first common node is operably connected to the third intermediate node and the DC/DC converter stage is configured to be operated such that a difference of a first current applied to the DC/DC converter at the sixth intermediate node and a second current applied to the DC/DC converter at the seventh intermediate node is provided at the third intermediate node. The DC/DC converter stage can be built as a multi-port DC/DC converter, having three ports at the first side, or alternatively as two DC/DC converters wherein the first sides are stacked between the sixth and seventh intermediate nodes and having as common node the first common node.

The first and second boost circuits have a second common node. According to one advantageous aspect of the present disclosure, the first common node (of the third converter stage) and the second common node (of the second converter stage) are not connected, i.e. they are free from a direct or equipotential link between the two nodes. Likewise, the second common node is advantageously not connected to the third intermediate node (i.e. not connected through a direct or equipotential link or connection). However, the first common node and the third intermediate node are advantageously connected (i.e. through a direct or equipotential link).

One advantage of the electrical converter according to the invention is that the isolated DC/DC converter stage acts as a current injection circuit, and hence no additional third harmonic current injection circuit is necessary to obtain sinusoidal mains currents with low total harmonic distortion and/or unity power factor. Nevertheless, by operating the DC/DC (third) converter stage as a third harmonic current injection circuit, it is advantageously obtained that the voltages at the first side of the DC/DC converter stage (between the sixth intermediate node and the first common node and between the first common node and the seventh intermediate node) remain positive and different from zero, in particular at the crossings of the AC phase voltages. This is made possible by separating the first common node from the second common node and results in better controllability of the third converter stage. Furthermore, electrical energy storage elements required for the current injection circuit to operate can be dispensed with, since they are taken over by components already present in the isolated DC/DC converter stage. Electrical converters according to the invention hence are more compact, require less components and therefore are more economical.

According to a second aspect of the invention, there is provided a battery charging system, such as for charging the battery of an electric vehicle, or an electric motor drive system, comprising a power supply, the power supply comprising the electrical converter as described herein.

## Brief description of the figures

Aspects of the invention will now be described in more detail with reference to the appended drawings, wherein same reference numerals illustrate same features and wherein:

Figure 1 schematically shows an electrical power converter according to the invention.
Figure 2 represents the AC three phase grid voltages and currents.
Figure 3 represents the voltage and current at the upper intermediate node.
Figure 4 represents the voltage and current at the lower intermediate node.
Figure 5 represents the voltage and current at the middle intermediate node.
Figure 6 represents the voltages of Figs. 3-5 in a single diagram, together with the boost voltages at the upper and lower boost nodes during a whole period (360°) of the AC grid voltage.
Figure 7 represents the input voltages to the isolated DC/DC converters during a whole period (360°) of the AC grid voltage.
Figure 8 represents the input currents to the isolated DC/DC converters during a whole period (360°) of the AC grid voltage.
Figure 9 represents the output power of the isolated DC/DC converters during a whole period (360°) of the AC grid voltage.
Figure 10 represents a topology of a galvanically isolated DC/DC converter for use in electrical converters according to the invention.
Figure 11 represents a topology of a multi-port galvanically isolated DC/DC converter for use as a third converter stage in electrical converters according to the invention.
Figure 12 represents a diagram of a battery charging system according to aspects of the present disclosure.

## Description of embodiments

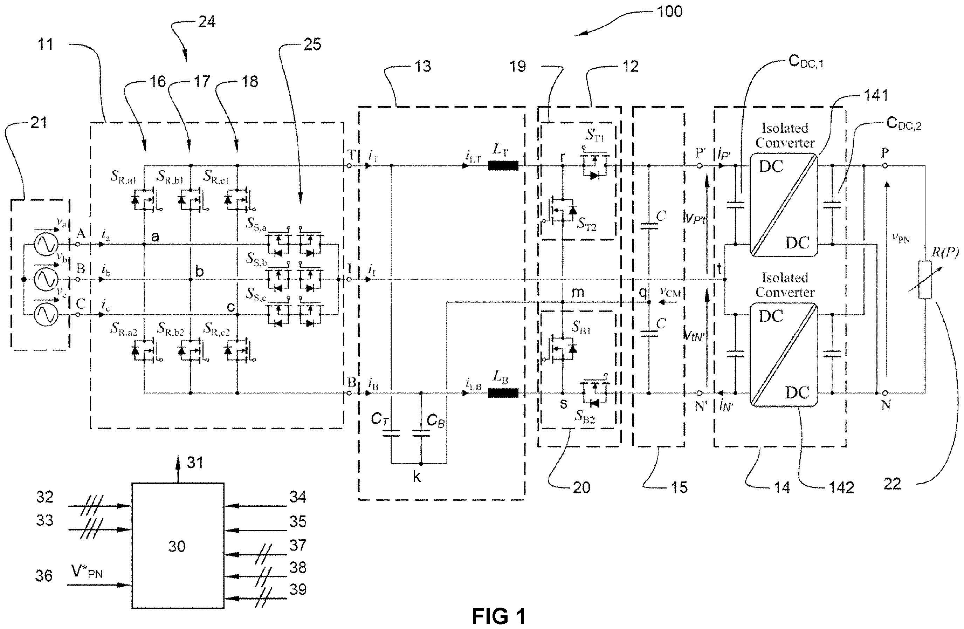

Referring to Fig. 1, an exemplary embodiment of electrical power converter 100, comprises a first converter stage 11, a second converter stage 12, an input filter 13, and an output filter 15. Electrical converter 100 further comprises a third converter stage 14.

The electrical converter 100 is an AC-to-DC converter that has three phase input terminals A, B, C which are connected to a three-phase voltage of a three-phase AC grid 21, and two DC terminals P, N which for example may be connected to a DC load 22, such as a high voltage (e.g. 250-450V) battery of an electric car.

The first converter stage 11 comprises three phase nodes a, b, c that are connected to the three phase input terminals A, B, C, and three output nodes T, I, B. These output nodes may be seen as an upper intermediate node T, a lower intermediate node B, and a middle intermediate node I.

The first converter stage 11 comprises a conversion circuitry 24 for conversion between a three-phase AC signal with three phase voltages provided at the three phase nodes a, b, c and an intermediate (DC) signal between the upper intermediate node T and the lower intermediate node B. When the conversion is from AC to DC, the conversion circuitry 24 functions as a rectifier, and when the conversion is from DC to AC, the conversion circuitry functions as an inverter. The conversion circuitry 24 advantageously comprises a three-phase bridge circuitry consisting of three bridge legs 16, 17, 18 wherein each bridge leg can comprise two active (bidirectional) or passive semiconductor switching devices connected in the form of a half bridge configuration. In the example of Fig. 1, the bridge circuitry 24 acts as a three phase bridge rectifier comprising a pair of active switching devices in each bridge leg: $S_{R,a1}$ and $S_{R,a2}$ for leg 16, $S_{R,b1}$ and $S_{R,b2}$ for leg 17, $S_{R,c1}$ and $S_{R,c2}$ for leg 18. Alternatively, diodes can be used instead of the active switching devices to obtain a passive, unidirectional three phase bridge rectifier.

The first converter stage 11 further comprises a phase selector 25 comprising three voltage-bidirectional semiconductor switching devices ($S_{S,a}$, $S_{S,b}$, and $S_{S,c}$) allowing for bidirectional interruption of electric current and bidirectional blocking of voltage. Each of these current-bidirectional switching devices can comprise two anti-series connected active semiconductor switching devices.

Each active semiconductor switching device of the bridge circuitry 24 and/or the phase selector 25 advantageously comprises an anti-parallel diode. By way of example, Metal Oxide Field Effect Transistors (MOSFETs) are used for the active semiconductor switching devices, and each may include an internal anti-parallel body diode that may replace an external anti-parallel diode.

The second converter stage 12 comprises, or consists of, two stacked boost circuits 19, 20. Each boost circuit 19, 20 advantageously comprises a first boost switch ($S_{T2}$ for the upper boost circuit 19 and $S_{B1}$ for the lower boost circuit 20) and second boost switch ($S_{T1}$ for the upper boost circuit 19 and $S_{B2}$ for the lower boost circuit 20) connected in a half-bridge configuration. The first and second boost switches can be active, bidirectional switches, allowing bidirectional current flow, but current interruption in one sense only, e.g. MOSFET switching devices with anti-parallel (body) diode. Alternatively, the second boost switches $S_{T1}$ and $S_{B2}$ can be replaced by diodes. The middle node (switch node) r of the upper boost circuit 19 is connected to upper intermediate voltage node T via an upper boost inductor $L_T$. The middle node (switch node) s of the lower boost circuit 20 is connected to lower intermediate voltage node B via a lower boost inductor $L_B$. The first switches of the upper and lower boost circuits 19, 20 are connected to each other in common node m of the upper and lower boost circuits 19, 20. The second boost switch $S_{T1}$ of the upper boost circuit 19 is connected between the middle node r and an upper boost node P'. The second boost switch $S_{B2}$ of the lower boost circuit 20 is connected between the middle node s and a lower boost node N'.

The upper boost inductor $L_T$ and the lower boost inductor $L_B$ form the inductive part of the input filter 13. The capacitive part of the input filter 13 is advantageously formed by two high-frequency (HF) filter capacitors $C_T$, $C_B$ each connected between the respective upper and lower intermediate node T, B, and a common node, which may be further connected to the common node m between the boost circuits 19 and 20. Generally, it is advantageous that the two capacitors $C_T$, $C_B$ have substantially equal capacitance in order to symmetrically load the AC grid.

The output filter 15 comprises two series connected output filter capacitors C, advantageously of equal capacitance, connected across the outputs P' and N' of the upper and lower boost circuits 19, 20 respectively. P' and N' will hereinafter be referred to as upper and lower boost nodes, respectively. A midpoint node q between the output filter capacitors C is advantageously connected to the common node m between the upper and lower boost circuits 19, 20. It is alternatively possible to provide a single output filter capacitor connected across the upper and lower boost nodes P' and N'.

The upper boost circuit 19 is connected between the upper boost node P' and the common node m (advantageously in parallel with the upper output filter capacitor), and is arranged in a way that current can flow from the upper intermediate node T to the upper boost node P' (or vice versa) via switch $S_{T1}$ when switch $S_{T2}$ is open (not conducting, off state), and current can flow from the upper intermediate node T to the common node m (or vice versa) via the switch $S_{T2}$ when the switch $S_{T2}$ is closed (conducting, on state). At least boost switch $S_{T2}$ of the boost circuit 19 is an actively controlled semiconductor switching device, for example a MOSFET, which may be operated by pulse width modulation. In case the switch $S_{T1}$ is replaced by a diode $D_{T1}$, current can flow from the upper intermediate node T to the upper boost node P' via diode $D_{T1}$ when switch $S_{T2}$ is open (not conducting, off state) but current cannot flow from the upper boost node P' to the upper intermediate node T.

The lower boost circuit 20 is connected between the common node m and the lower boost node N' (advantageously in parallel with the lower output filter capacitor), and is arranged in a way that current can flow from the lower boost node N' to the lower intermediate node B (or vice versa) via the switch $S_{B2}$ when the switch $S_{B1}$ is open (not conducting, off state), and current can flow from the common node m to the lower intermediate node B (or vice versa) via the switch $S_{B1}$ when the switch $S_{B1}$ is closed (conducting, on state). At least boost switch $S_{B1}$ of the boost circuit 20 is an actively controlled semiconductor switching device, for example a MOSFET, which may be operated by pulse width modulation. In case the switch $S_{B2}$ is replaced by a diode $D_{B2}$, current can flow from the lower boost node N' to the lower intermediate node B via diode $D_{B2}$ when switch $S_{B1}$ is open (not conducting, off state) but current cannot flow from the lower intermediate node B to the lower boost node N'.

The electrical converter optionally comprises a neutral terminal (not shown) for connecting to the neutral conductor of the grid. The neutral terminal can be connected to the common node k of the high-frequency (HF) filter capacitors $C_T$, $C_B$ and/or to the common node m of the first and second boost circuits 19, 20. Referring to Fig. 1, the common node m is connected to the common node k of the high-frequency (HF) filter capacitors $C_T$, $C_B$.

The third converter stage 14 is formed by two galvanically isolated DC/DC converters 141, 142 whose inputs are connected in series across the upper and lower boost nodes P' and N' and whose outputs are connected to the output terminals P, N of the converter 100, either through a parallel connection as shown in Fig. 1, or through a series connection. It is possible to provide a switching device allowing for commutating the outputs of the isolated DC/DC converters 141, 142 between parallel connection and series connection across the output terminals P, N. The common node t between the inputs of the isolated DC/DC converters 141, 142 is advantageously directly connected to the middle intermediate node I without there being any inductors in the path between middle intermediate node I and t.

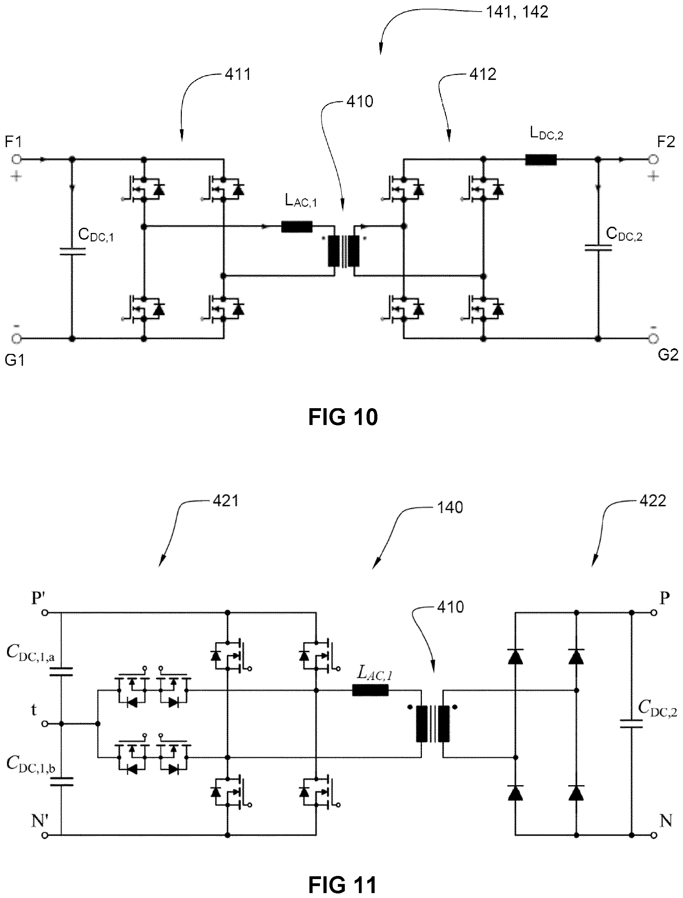

Any suitable galvanically isolated DC/DC converter as known in the art can be used for converters 141 and 142. One possible DC/DC converter topology for converters 141 and 142 is represented in Fig. 10 as a bidirectional full bridge DC/DC converter. Such a converter comprises a first side with nodes F1, G1 and a first full bridge converter circuit 411, and a second side with nodes F2, G2 and a second full bridge converter circuit 412. The first and second full bridge converter circuits 411, 412 are coupled through a transformer 410 e.g. having 1:1 winding ratio, even though any other suitable winding ratio can be used, and performing the galvanic isolation. The switches in the bridge legs of the first full bridge converter circuit 411 are active semiconductor switching devices. The switches in the bridge legs of the second full bridge converter circuit 412 can be active or passive semiconductor switching devices. In case active switches are used in the second full bridge converter circuit 412, the isolated DC/DC converter can be used for bidirectional power flow.

The first side nodes F1, G1 are connected to nodes P' and t respectively for the upper isolated DC/DC converter 141 and to nodes t and N' respectively for the lower isolated DC/DC converter 142. The second side nodes F2, G2 are connected to the DC terminals P, N of the converter 100, either through a series or parallel connection between converters 141 and 142.

The topology of Fig. 10 is just an exemplary embodiment of possible converter topologies that can be used for DC/DC converters 141 and 142. By way of example, either one of the inductor $L_{AC,1}$ at the first side and $L_{DC,2}$ at the second side can be omitted.

Referring to Fig. 11, an exemplary embodiment of a multi-port galvanically isolated DC/DC converter 140 can replace the DC/DC converters 141 and 142 to act as the third converter stage 14. This converter comprises a first side 421 with nodes connected to nodes P', t and N' as indicated in Fig. 11 and which acts in analogy of two stacked active full bridges. The second side 422 can comprise a full bridge converter circuit with active or passive semiconductor switches.

Further suitable topologies for DC/DC converters in the third converter stage 14 are described in Krismer Florian, Modeling and Optimization of Bidirectional Dual Active Bridge DC-DC Converter Topologies, Dissertation ETH Zürich No. 19177, 2010, available online: https://www.pes-publications.ee.ethz.ch/uploads/tx_ethpublications/Krismer_2011_03_17_Modeli ng_an
d_Optimization_of_Bidirectional_Dual_Active_Bridge_ DC-DC_Converter_Topologies.pdf

Referring again to Fig. 1, the electrical power converter 100 can comprise a control unit 30 which advantageously controls all the active semiconductor switching devices of the electrical converter 100, sending control signals to each switch via a communication interface 31. In particular, semiconductor switching devices $S_{R,a1}$, $S_{R,a2}$, $S_{R,b1}$, $S_{R,b2}$, $S_{R,c1}$, $S_{R,c2}$ of bridge circuitry 24, switching devices $S_{S,a}$, $S_{S,b}$, and $S_{S,c}$ of phase selector 25, and boost switches $S_{T2}$, $S_{B1}$, $S_{T1}$ and $S_{B2}$ are actively controlled by controller 30 through interface 31. Boost switches $S_{T2}$, $S_{B1}$, $S_{T1}$ and $S_{B2}$ and possibly the other active switching devices as well are in particular controlled based on pulse width modulation. Furthermore, the control unit can comprise one or more measurement input ports (32, 33, 34, 35, 37, 38, 39), for receiving measurements of one or more of:

- 32: the AC-grid phase voltages $v_a$, $v_b$, $v_c$;
- 33: the intermediate currents $i_T$, $i_B$, $i_i$;
- 34: the DC bus voltage $V_{PN}$;
- 35: the mid-point voltage $V_{CM}$ of the output filter capacitors at node q;
- 37: the DC bus voltages $v_{P'q}$, $v_{qN'}$ of the output filter 15;
- 38: the input voltages $v_{P't}$, $v_{tN'}$ of the isolated DC/DC converters;
- 39: the input currents $i_{P'}$, $i_{N'}$ of the isolated DC/DC converters;

and an input port 36 to receive a set-value, which may be a requested DC output voltage $V_{PN}^*$ .

In addition, the control unit 30 advantageously controls the active switches of at least the first side 411, 421 of the isolated DC/DC converters 141, 142 or 140.

The electrical converter 100 basically combines a boost type three-phase rectifier formed by the first converter stage 11, input filter 13, second power (boost) stage 12 and output filter 15, with two series-in connected isolated DC/DC converters. According to the present invention, the isolated DC/DC converter stage together with the phase selector 25 act as a third-harmonic current injection circuit, obviating the need for an additional conventional buck-boost circuit and boost inductor, resulting in a more compact design.

When a three-phase AC grid 21 is connected to the input terminals A, B, C with AC grid phase voltages $v_a$, $v_b$, $v_c$ (Fig. 2), the three phase bridge circuitry 24 acts as a rectifier and ensures that the instantaneous highest voltage of the AC grid phase voltages $v_a$, $v_b$, $v_c$ is applied to the upper intermediate node T, obtaining at T a voltage $v_T$ as shown in Fig. 3, and the instantaneous lowest voltage of the AC grid phase voltages $v_a$, $v_b$, $v_c$ is applied to the lower intermediate node B, obtaining at B a voltage $v_B$ as shown in Fig. 3. To achieve this, the corresponding phase connection node a, b, or c is connected with the intermediate node T or B via the upper respectively lower switch of the corresponding bridge leg 16, 17, 18, while the corresponding selector switch $S_{S,a}$, $S_{S,b}$, or $S_{S,c}$ is open (not conducting, off state). The phase selector switches $S_{S,a}$, $S_{S,b}$, and $S_{S,c}$ are controlled, e.g. by controller 30, such that the instantaneous intermediate voltage between the highest voltage and the lowest voltage of the AC grid phase voltages $v_a$, $v_b$, $v_c$ is applied to the middle intermediate node I, obtaining at I a voltage $v_I$ as shown in Fig. 5. The switching states of the selector switches ($S_{S,a}$, $S_{S,b}$, and $S_{S,c}$) are 'on' or 'off' continuously during whole particular 60° sectors within the period (360°) of the AC mains voltage. Also the switches of the bridge circuitry 24 are 'conducting' or 'not conducting' during whole particular sectors, e.g. of 60°, within the period (360°) of the AC mains voltage. The combination of states of the switches of the bridge rectifier and the phase selector is unique for every 60° sector of the three-phase AC input voltage and depends on the voltage value of the AC grid phase inputs (A, B, C). The sequence of the 6 unique states of the switches repeats itself every period (360°) of the AC mains voltage.

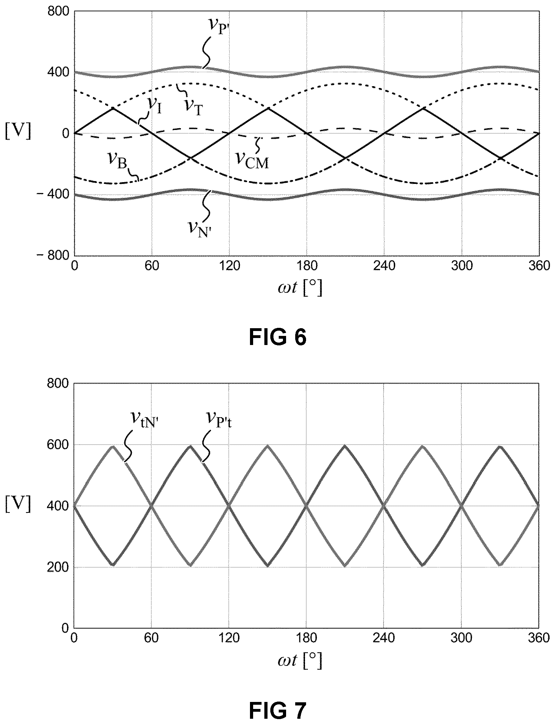

Referring to Fig. 6, the upper and lower boost stages 19, 20 ensure that the voltage $v_P$, at upper boost node P' is stepped up compared to the voltage $v_T$ at upper intermediate node T and that the voltage $v_N$, at lower boost node N' is stepped down compared to the voltage $v_B$ at the lower intermediate node B. When two output filters C with equal capacitance are used for the output filter 15, and the midpoint node q between the output filter capacitors C is connected to the common node m between the upper and lower boost circuits 19, 20 and to the common node of filter capacitors $C_T$ and $C_B$ of input filter 13, the midpoint potential at node q can be controlled to be equal to the star-point potential of the three-phase AC grid 21, i.e., $v_{CM}$ = 0, or controlled to have a third-harmonic voltage content as shown in Fig. 6. This can be achieved by appropriate control of the boost circuits 19, 20. In particular, boost circuits 19 and 20 are able to inject a common offset voltage to nodes r and s by adding a common offset to the PWM duty-cycles of switches $S_{T2}$, $S_{B1}$. This common voltage reflects into a controlled $v_{CM}$.

Referring to Fig. 7, the second converter stage 12 (boost stage) ensures that the DC voltage $v_{P't}$ at the input of the upper DC/DC converter 141 (between nodes P' and t) and DC voltage $v_{tN'}$ at the input of the lower DC/DC converter 142 (between nodes t and N') always remain above zero at the crossings of the AC grid phase voltages. This ensures a good controllability of the isolated DC/DC converters in all operating points, resulting in improved total harmonic distortion of the AC grid currents and improved efficiency of the isolated DC/DC converters.

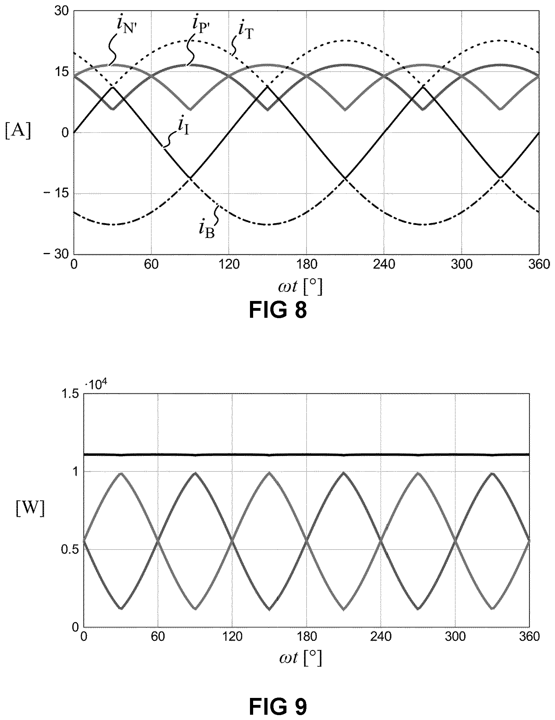

Referring to Fig. 8, the input currents $i_{P'}$ and $i_{N'}$ through nodes P' and N' (and hence through the isolated DC/DC converter stage 14 can be controlled to always be different from zero. Input currents $i_{P'}$ and $i_{N'}$ can be (independently) controlled, e.g. through appropriate (PWM) control of the active switches of the (first side 411, 421 of the) isolated DC/DC converter(s) 141, 142, or 140, by control unit 30, such that the difference of $i_{P'}$ and $i_{N'}$ results in the desired third-harmonic injection current $i_I$ (Fig. 5) through intermediate node I. As a result, the need for an additional third harmonic current injection circuit to obtain the desired third-harmonic current $i_I$ is obviated, yielding a more compact design.

The input filter 13 in the DC-link between nodes T and B on the one hand, and nodes r and s on the other, can comprise only two inductors $L_T$ and $L_B$ operably coupled to the upper intermediate node T and lower intermediate node B respectively, without there being any inductor operably coupled to the middle intermediate node I. In other words, the current injection line between the middle intermediate node I and the common node t between the inputs of the isolated DC/DC converters can be free of inductive energy storage elements. Alternatively, a third inductor can be provided between nodes I and t.

Electrical converters according to the invention are advantageously used for converting from three-phase AC to DC and/or vice versa. Particularly useful applications are in power supply units of battery chargers, in particular for charging electric batteries of electric (motor-driven) vehicles.

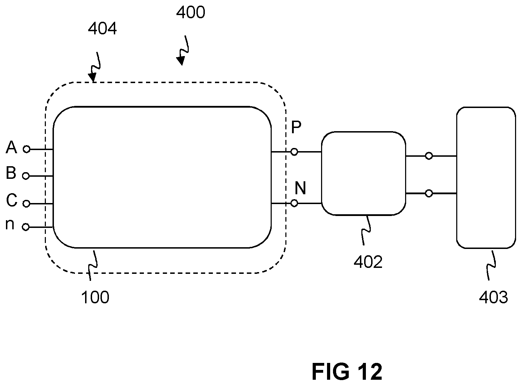

Referring to FIG. 12, a battery charging system 400 comprises a power supply unit 404. The power supply unit 404 is coupled on one side to the AC grid through terminals A, B, C, possibly additionally to the neutral conductor n and on the other side (at DC terminals P, N) to an interface 402, e.g. comprising a switch device, which allows to connect the power supply unit 404 to a battery 403. The power supply unit 404 comprises the electrical converter 100 as described hereinabove. The power supply unit 404 can further comprise a pair of coils which are inductively coupled through air, such as in case of wireless power transfer (not shown). In some cases, the interface 402 can comprise a plug and socket, e.g. in wired power transfer. Alternatively, the plug and socket can be provided at the input (e.g., at nodes A, B, C, n).

**Claims**

1. Electrical converter (100) for converting between an AC signal comprising three phase voltages and a galvanically isolated DC voltage, comprising:

   three phase terminals (A, B, C) and two DC terminals (P, N),
   a first converter stage (11) comprising a conversion circuitry (24) configured for converting between the three phase voltages at the three phase terminals and first voltages ($v_T$, $v_B$) at a first intermediate node (T) and a second intermediate node (B), and a phase selector (25) comprising first active switches ($S_{S,a}$, $S_{S,b}$, $S_{S,c}$) configured to selectively connect the three phase terminals (A, B, C) to a third intermediate node (I),
   a second converter stage (12) configured for converting between second signals at a fourth intermediate node (r) and a fifth intermediate node (s) and third signals at a sixth intermediate node (P') and a seventh intermediate node (N'), wherein the second converter stage comprises a boost circuit (19, 20) operably coupled to the sixth and seventh intermediate nodes (P', N'),
   a link (13) connecting the first intermediate node (T) to the fourth intermediate node, and the second intermediate node (B) to the fifth intermediate node, and
   a third converter stage (14), comprising a galvanically isolated DC/DC converter stage (141, 142, 140) comprising a first side connected to the sixth intermediate node (P'), a first common node (t) and the seventh intermediate node (N'), wherein the DC terminals (P, N) are connected to a second side of the DC/DC converter stage galvanically isolated from the first side, wherein the first common node (t) is operably connected to the third intermediate node (I) and wherein the DC/DC converter stage is configured to be operated such that a difference of a first current ($i_P$) applied to the DC/DC converter stage at the sixth intermediate node (P') and a second current ($i_{N'}$) applied to the DC/DC converter stage at the seventh intermediate node (N') is provided at the third intermediate node (I),
   wherein the boost circuit comprises a first boost circuit (19) and a second boost circuit (20) stacked between the sixth and seventh intermediate nodes, wherein the first and second boost circuits have a second common node (m) being free from a direct link to the first common node (t) and the third intermediate node (I).

2. Electrical converter of claim 1, wherein the phase selector (25) is configured to selectively connect the three phase terminals (A, B, C) to the first common node (t) along a current path free of inductive storage elements.

3. Electrical converter of claim 1 or 2, further comprising an output filter (15), the output filter comprising two series connected output filter capacitors (C) connected across the sixth intermediate node (P') and the seventh intermediate node (N'), wherein a midpoint node (q) between the output filter capacitors (C) is connected to the second common node (m).

4. Electrical converter of any one of the preceding claims, wherein the link (13) comprises a capacitive part connecting the first intermediate node (T) and the second intermediate node (B) through at least one capacitor ($C_T$, $C_B$).

5. Electrical converter of claim 4, wherein the capacitive part comprises a third common node (k) connected to the second common node (m).

6. Electrical converter of any one of the preceding claims, comprising a neutral terminal for connecting to a neutral conductor carrying a neutral phase of the AC signal, wherein the neutral terminal is connected to the second common mode (m).

7. Electrical converter of any one of the preceding claims, wherein the link (13) comprises a first inductive storage element ($L_T$) and preferably a second inductive storage element ($L_B$), operably coupled to the second converter stage.

8. Electrical converter of any one of the preceding claims, comprising a control unit (30), wherein the control unit is configured to operate the first active switches ($S_{S,a}$, $S_{S,b}$, $S_{S,c}$) for connecting a phase terminal (A, B, C) having a lowest instantaneous absolute voltage value of the three phase voltages to the third intermediate node (I).

9. Electrical converter of claim 8, comprising measuring means for measuring a parameter of the third signals and a signal at the third intermediate node (I), operably coupled to the control unit (30).

**10.** Electrical converter of any one of the preceding claims, wherein the galvanically isolated DC/DC converter stage comprises a first galvanically isolated DC/DC converter (141) comprising a first side connected to the sixth intermediate node (P') and the first common node (t) and a second galvanically isolated DC/DC converter (142) comprising a first side connected to the first common node (t) and the seventh intermediate node (N'), wherein the DC terminals (P, N) are connected to second sides of the first and second DC/DC converter.

**11.** Electrical converter of claim 10, wherein the second sides of the first and second isolated DC/DC converters (141, 142) are connected in parallel or in series across the DC terminals (P, N).

**12.** Battery charging system, in particular for charging a battery of an electric vehicle, comprising a power supply unit, the power supply unit comprising the electrical converter (100) of any one of the preceding claims.

**13.** Electric motor drive system, comprising a power supply unit, the power supply unit comprising the electrical converter (100) of any one of the claims 1 to 11.


**Patentansprüche**

**1.** Stromwandler (100) zum Umwandeln zwischen einem Wechselstromsignal, umfassend drei Phasenspannungen und einer galvanisch isolierten Gleichspannung, umfassend:

drei Phasenanschlüsse (A, B, C) und zwei Gleichstromanschlüsse (P, N),
eine erste Wandlerstufe (11), umfassend eine Wandlerschaltung (24), die konfiguriert ist, um zwischen den drei Phasenspannungen an den drei Phasenanschlüssen und ersten Spannungen ($v_T$, $v_B$) an einem ersten Zwischenknoten (T) und einem zweiten Zwischenknoten (B) umzuwandeln, und einen Phasenselektor (25), umfassend erste aktive Schalter ($S_{S,a}$, $S_{S,b}$, $S_{S,c}$), die konfiguriert sind, um die drei Phasenanschlüsse (A, B, C) selektiv mit einem dritten Zwischenknoten (I) zu verbinden,
eine zweite Wandlerstufe (12), die konfiguriert ist, um zwischen zweiten Signalen an einem vierten Zwischenknoten (r) und einem fünften Zwischenknoten (s) und dritten Signalen an einem sechsten Zwischenknoten (P') und einem siebten Zwischenknoten (N') umzuwandeln, wobei die zweite Wandlerstufe eine Aufwärtsschaltung (19, 20), die funktionsfähig mit dem sechsten und siebten Zwischenknoten (P', N') gekoppelt ist, umfasst,

eine Verbindung (13), das den ersten Zwischenknoten (T) mit dem vierten Zwischenknoten und den zweiten Zwischenknoten (B) mit dem fünften Zwischenknoten verbindet, und
eine dritte Wandlerstufe (14), umfassend eine galvanisch isolierte Gleichstrom/Gleichstrom-Wandlerstufe (141, 142, 140), umfassend eine erste Seite, die mit dem sechsten Zwischenknoten (P'), einem ersten gemeinsamen Knoten (t) und dem siebten Zwischenknoten (N') verbunden ist, wobei die Gleichstromanschlüsse (P, N) mit einer zweiten Seite der Gleichstrom/Gleichstrom-Wandlerstufe verbunden sind, die galvanisch von der ersten Seite isoliert ist, wobei der erste gemeinsame Knoten (t) funktionsfähig mit dem dritten Zwischenknoten (I) verbunden ist und wobei die Gleichstrom/Gleichstrom-Wandlerstufe konfiguriert ist, um betrieben zu werden, sodass eine Differenz eines ersten Stroms ($I_{P'}$), der an die Gleichstrom/Gleichstrom-Wandlerstufe an dem sechsten Zwischenknoten (P') angelegt wird, und eines zweiten Stroms ($i_{N'}$), der an die Gleichstrom/Gleichstrom-Wandlerstufe an dem siebten Zwischenknoten (N') angelegt wird, an dem dritten Zwischenknoten (I) bereitgestellt wird,
wobei die Aufwärtsschaltung eine erste Aufwärtsschaltung (19) und eine zweite Aufwärtsschaltung (20) umfasst, die zwischen dem sechsten und dem siebten Zwischenknoten gestapelt sind,

wobei die erste und die zweite Aufwärtsschaltung einen zweiten gemeinsamen Knoten (m) aufweisen, der frei von einer direkten Verbindung zu dem ersten gemeinsamen Knoten (t) und zu dem dritten Zwischenknoten (I) ist.

**2.** Stromwandler nach Anspruch 1, wobei der Phasenselektor (25) konfiguriert ist, um die drei Phasenanschlüsse (A, B, C) entlang eines Strompfads, der frei von induktiven Speicherelementen ist, selektiv mit dem ersten gemeinsamen Knoten (t) zu verbinden.

**3.** Stromwandler nach Anspruch 1 oder 2, ferner umfassend einen Ausgangsfilter (15), der Ausgangsfilter umfassend zwei in Reihe verbundene Ausgangsfilterkondensatoren (C), die über den sechsten Zwischenknoten (P') und den siebten Zwischenknoten (N') verbunden sind, wobei ein Mittelpunktknoten (q) zwischen den Ausgangsfilterkondensatoren (C) mit dem zweiten gemeinsamen Knoten (m) verbunden ist.

**4.** Stromwandler nach irgendeinem der vorherigen Ansprüche, wobei die Verbindung (13) einen kapazitiven Teil, der den ersten Zwischenknoten (T) und den zweiten Zwischenknoten (B) über mindestens einen Kondensator (C_T, C_B) verbindet, umfasst.

5. Stromwandler nach Anspruch 4, wobei der kapazitive Teil einen dritten gemeinsamen Knoten (k), der mit dem zweiten gemeinsamen Knoten (m) verbunden ist, umfasst.

6. Stromwandler nach irgendeinem der vorherigen Ansprüche, umfassend einen Nullleiteranschluss zum Verbinden mit einem Nullleiter, der eine Nullleiterphase des Wechselstromsignals trägt, wobei der Nullleiteranschluss mit dem zweiten gemeinsamen Knoten (m) verbunden ist.

7. Stromwandler nach irgendeinem der vorherigen Ansprüche, wobei die Verbindung (13) ein erstes induktives Speicherelement (L_T) und vorzugsweise ein zweites induktives Speicherelement (L_B), das oder die funktionsfähig mit der zweiten Wandlerstufe gekoppelt ist oder sind, umfasst.

8. Stromwandler nach irgendeinem der vorherigen Ansprüche, umfassend eine Steuereinheit (30), wobei die Steuereinheit konfiguriert ist, um die ersten aktiven Schalter (S_{S,a}, S_{S,b}, S_{S,c}) zu betätigen, um einen Phasenanschluss (A, B, C) mit einem niedrigsten momentanen absoluten Spannungswert der drei Phasenspannungen mit dem dritten Zwischenknoten (I) zu verbinden.

9. Stromwandler nach Anspruch 8, umfassend funktionsfähig mit der Steuereinheit (30) gekoppelte Messmittel zum Messen eines Parameters der dritten Signale und eines Signals an dem dritten Zwischenknoten (I).

10. Stromwandler nach irgendeinem der vorherigen Ansprüche, wobei die galvanisch isolierte Gleichstrom/Gleichstrom-Wandlerstufe einen ersten galvanisch isolierten Gleichstrom/Gleichstrom-Wandler (141) mit einer ersten Seite, die mit dem sechsten Zwischenknoten (P') und dem ersten gemeinsamen Knoten (t) verbunden ist, und einen zweiten galvanisch isolierten Gleichstrom/Gleichstrom-Wandler (142) mit einer ersten Seite, die mit dem ersten gemeinsamen Knoten (t) und dem siebten Zwischenknoten (N') verbunden ist, umfasst, wobei die Gleichspannungsanschlüsse (P, N) mit zweiten Seiten des ersten und zweiten Gleichstrom/Gleichstrom-Wandlers verbunden sind.

11. Stromwandler nach Anspruch 10, wobei die zweiten Seiten des ersten und zweiten isolierten Gleichstrom/Gleichstrom-Wandlers (141, 142) parallel oder in Reihe über die DC-Anschlüsse (P, N) verbunden sind.

12. Batterieladesystem, insbesondere zum Laden einer Batterie eines Elektrofahrzeugs, umfassend eine Stromversorgungseinheit, wobei die Stromversorgungseinheit den Stromwandler (100) nach irgendeinem der vorherigen Ansprüche umfasst.

13. Elektromotorantriebssystem, umfassend eine Stromversorgungseinheit, die Stromversorgungseinheit umfassend den Stromwandler (100) nach irgendeinem der Ansprüche 1 bis 11.

**Revendications**

1. Convertisseur électrique (100) pour effectuer une conversion entre un signal CA comprenant trois tensions de phase et une tension CC isolée galvaniquement, comprenant :

trois bornes de phase (A, B, C) et deux bornes CC (P, N),
un premier étage de convertisseur (11) comprenant un circuit de conversion (24) configuré pour effectuer une conversion entre les trois tensions de phase au niveau des trois bornes de phase et des premières tensions (v_T, v_B) au niveau d'un premier noeud intermédiaire (T) et d'un deuxième noeud intermédiaire (B), et un sélecteur de phase (25) comprenant des premiers commutateurs actifs (S_{S,a}, S_{S,b}, S_{S,c}) configurés pour connecter sélectivement les trois bornes de phase (A, B, C) à un troisième noeud intermédiaire (I),
un deuxième étage de convertisseur (12) configuré pour effectuer une conversion entre des deuxièmes signaux au niveau d'un quatrième noeud intermédiaire (r) et d'un cinquième noeud intermédiaire (s) et des troisièmes signaux au niveau d'un sixième noeud intermédiaire (P') et d'un septième noeud intermédiaire (N'), dans lequel le deuxième étage de convertisseur comprend un circuit survolteur (19, 20) couplé fonctionnellement aux sixième et septième noeuds intermédiaires (P', N'),
un lien (13) reliant le premier noeud intermédiaire (T) au quatrième noeud intermédiaire, et le deuxième noeud intermédiaire (B) au cinquième noeud intermédiaire, et
un troisième étage de convertisseur (14), comprenant un étage de convertisseur CC/CC isolé galvaniquement (141, 142, 140) comprenant un premier côté relié au sixième noeud intermédiaire (P'), un premier noeud commun (t) et le septième noeud intermédiaire (N'), dans lequel les bornes CC (P, N) sont connectées à un deuxième côté de l'étage de convertisseur CC/CC galvaniquement isolé du premier côté, dans lequel le premier noeud commun (t) est connecté fonctionnellement au troisième noeud intermédiaire (I) et dans lequel l'étage de convertisseur CC/CC est configuré pour être actionné de telle sorte qu'une différence d'un premier courant $(i_{p'})$ appliqué à l'étage de convertisseur CC/CC au niveau du sixième noeud intermédiaire (P') et d'un deuxième courant $(i_{N'})$ appliqué à l'étage de convertisseur CC/CC au niveau du septième noeud intermédiaire (N') est fourni au niveau du troisième noeud intermédiaire (I),

dans lequel le circuit survolteur comprend un premier circuit survolteur (19) et un deuxième circuit survolteur (20) empilés entre les sixième et septième noeuds intermédiaires, dans lequel les premier et deuxième circuits survolteurs ont un deuxième noeud commun (m) étant dépourvu d'un lien direct vers le premier noeud commun (t) et le troisième noeud intermédiaire (I).

2. Convertisseur électrique selon la revendication 1, dans lequel le sélecteur de phase (25) est configuré pour connecter sélectivement les trois bornes de phase (A, B, C) au premier noeud commun (t) le long d'un trajet de courant dépourvu d'éléments de stockage inductifs.

3. Convertisseur électrique selon la revendication 1 ou 2, comprenant en outre un filtre de sortie (15), le filtre de sortie comprenant deux condensateurs (C) de filtre de sortie connectés en série et connectés en pont entre le sixième noeud intermédiaire (P') et le septième noeud intermédiaire (N'), dans lequel un noeud de point médian (q) entre les condensateurs (C) de filtre de sortie est connecté au deuxième noeud commun (m).

4. Convertisseur électrique selon l'une quelconque des revendications précédentes, dans lequel le lien (13) comprend une partie capacitive connectant le premier noeud intermédiaire (T) et le deuxième noeud intermédiaire (B) à travers au moins un condensateur $(C_T, C_B)$.

5. Convertisseur électrique selon la revendication 4, dans lequel la partie capacitive comprend un troisième noeud commun (k) connecté au deuxième noeud commun (m).

6. Convertisseur électrique selon l'une quelconque des revendications précédentes, comprenant une borne neutre destinée à être connectée à un conducteur neutre portant une phase neutre du signal CA, dans lequel la borne neutre est connectée au deuxième mode commun (m).

7. Convertisseur électrique selon l'une quelconque des revendications précédentes, dans lequel le lien (13) comprend un premier élément de stockage inductif $(L_T)$ et de préférence un deuxième élément de stockage inductif $(L_B)$ couplé(s) fonctionnellement au deuxième étage de convertisseur.

8. Convertisseur électrique selon l'une quelconque des revendications précédentes, comprenant une unité de commande (30), dans lequel l'unité de commande est configurée pour actionner les premiers commutateurs actifs $(S_{S,a}, S_{S,b}, S_{S,c})$ pour assurer la connexion d'une borne de phase (A, B, C) ayant une valeur instantanée absolue de tension la plus basse des trois tensions de phase au troisième noeud intermédiaire (I).

9. Convertisseur électrique selon la revendication 8, comprenant des moyens de mesure pour mesurer un paramètre des troisièmes signaux et d'un signal au niveau du troisième noeud intermédiaire (I), couplés fonctionnellement à l'unité de commande (30).

10. Convertisseur électrique selon l'une quelconque des revendications précédentes, dans lequel l'étage de convertisseur CC/CC isolé galvaniquement comprend un premier convertisseur CC/CC isolé galvaniquement (141) comprenant un premier côté connecté au sixième noeud intermédiaire (P') et au premier noeud commun (t) et un deuxième convertisseur CC/CC isolé galvaniquement (142) comprenant un premier côté connecté au premier noeud commun (t) et au septième noeud intermédiaire (N'), dans lequel les bornes CC (P, N) sont connectées aux deuxièmes côtés du premier et deuxième convertisseur CC.

11. Convertisseur électrique selon la revendication 10, dans lequel les deuxièmes côtés des premier et deuxième convertisseurs CC/CC isolés (141, 142) sont connectés en parallèle ou en série aux bornes CC (P, N).

12. Système de chargement de batterie, en particulier pour le chargement d'une batterie d'un véhicule électrique, comprenant une unité d'alimentation, l'unité d'alimentation comprenant le convertisseur électrique (100) selon l'une quelconque des revendications précédentes.

13. Système d'entraînement de moteur électrique, comprenant une unité d'alimentation, l'unité d'alimentation comprenant le convertisseur électrique (100) selon l'une quelconque des revendications 1 à 11.

**FIG 1**

$v_a, i_a$  $v_b, i_b$  $v_c, i_c$

$\omega t$

0  120°

**FIG 2**

$v_T, i_T$

$\omega t$

0  120°

**FIG 3**

$\omega t$

0  120°

$v_B, i_B$

**FIG 4**

$\omega t$

0  120°

$v_I, i_I$

**FIG 5**

**FIG 6**

**FIG 7**

**FIG 8**

**FIG 9**

**FIG 10**

**FIG 11**

**FIG 12**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 3064848
- US 2013003431 A
- US 2014021180 A

### Non-patent literature cited in the description

- **BARBOSA P et al.** Analysis and evaluation of the two-switch three-level boost rectifier. *32nd annual IEEE Power Electronics Specialists Conference 2001 Conference proceedings,* 17 June 2001, vol. 3, 1659-1664
- **SILVA M et al.** Isolated Swiss-Forward Three-Phase Rectifier with Resonant Reset. *IEEE Transactions on Power Electronics,* 2016, vol. 31 (7), 4795-4808
- **KRISMER FLORIAN.** Modeling and Optimization of Bidirectional Dual Active Bridge DC-DC Converter Topologies. *Dissertation ETH Zürich,* 2010, 19177